# EUROPEAN PATENT APPLICATION

(11) **EP 1 480 122 A1**
(43) Date of publication of application: **24.11.2004**
(21) Application number: 03011633.9
(22) Date of filing: 22.05.2003
(51) Int. Cl.: G06F 9/46, G06F 12/02

(54) **Data exchange method between an electronic device and a memory card using a clipboard**

(71) Applicant: Sony Ericsson Mobile Communications AB, 221 88 Lund (SE)
(72) Inventor: Mäenpää, Jari, Sony Ericsson Mobile Com. Int. AB, 85609 Aschheim-Dornach (DE)
(74) Representative: Körber, Martin, Dipl.-Phys.

(57) **Abstract**

The present invention relates to a data exchange method for exchanging data files between an electronic device (1) and a memory card (5) which can be connected to the electronic device (1), whereby, when a data file is to be copied from the memory card (5) to the electronic device (1) or from the electronic device (1) to the memory card (5), a clipboard data space (10) is used to store the data file and/or reference information relating to the data file to be copied to or from the memory card (5).

The present invention hereby enables to copy data files of any kind to and from a memory card while still maintaining the interoperability for data exchange between a memory card and an electronic device.

## Description

The present invention relates to a data exchange method for exchanging data files between an electronic device and a memory card which can be connected to the electronic device.

Memory cards, such as the memory stick invented by the applicant as well as memory devices of other types are in wide-spread use. Such memory cards comprise a memory means, such as a flash memory, for storing data from electronic devices such as digital cameras, laptops, CD players, MD players and so on. Hereby, the electronic devices comprise a connecting possibility, such as a slot, for connecting and housing one or more memory cards. A memory card, when inserted and/or connected to an electronic device, can store digital data from the electronic device. After removing the memory card from the electronic device, the memory card can be connected to another electronic device, to which the data stored in the memory card can be copied or transferred. Thus, memory cards provide a simple and easy possibility to exchange data between devices which are not physically connected to each other. Usually, a memory card comprises a control unit and a memory means, whereby the data exchange to and from the memory means is controlled by the control unit. The structure of such a memory card is e.g. described in US 2001/0011267 A1.

The disadvantage of known memory cards and data exchange methods for exchanging data between an electronic device and a memory card is that there is no complete flexibility for the data storage on the memory card while at the same time a simple interoperability for a data exchange between a memory card and an electronic device is ensured. At present, various memory cards of different types provided from different manufactures exist. If such a known memory card is to be used with only one kind of device, the memory card is only used as a storage means and the devices could use there completely proprietary folder structures, file types and so on to store files of any type to the memory card. However, if such a memory card is to be used with different devices, probably even devices from different manufacturers, a problem exists in that there is no standardisation or data exchange functionality which allows devices of different kinds to use the memory card as a storage and data exchange means.

The object of the present invention is therefore to provide a data exchange method for exchanging data files between an electronic device and a memory card as well as a memory card and an electronic device which enable the storage of data files of any type on the memory card and at the same time a simple interoperability for the data exchange between the memory card and the electronic device.

The above object is achieved by a data exchange method for exchanging data files between an electronic device and a memory card which can be connected to the electronic device according to claims 1, whereby, when a data file is to be copied from the memory card to the electronic device or from the electronic device to the memory card, a clipboard data space is used to store the data file and/or reference information relating to the data file to be copied to or from the memory card. The above object is further achieved by a memory card according to claim 9 and an electronic device according to claim 10.

The present invention hereby enables a complete flexibility for data storage while still a simple interoperability for the data exchange between the memory card and the electronic device is ensured by introducing the clipboard concept for the data exchange. The introduction and the use of the clipboard concept for copying and pasting data files to and from a memory card gives complete freedom in relation to the data types stored on the memory card while at the same time ensuring a simple interoperability. Hereby, copying and pasting data files from any context to any other contexts is possible leaving it up to the end-user to understand when such an operation makes sense or not. The file formats of the data files have to be readable and usable in order to ensure the interoperability. This is completely contrary to known concepts in which copying data files to and from a memory card was only possible for certain and well defined contexts. The data exchange method and the memory card according to the present invention are particularly advantageous since they allow the data storage on the memory card and the data exchange between the memory card and devices of different kinds and manufactures. For example, the memory card according to the present invention could be used with digital video cameras, mobile telephones, PDAs, laptops and so on even of different manufacturers in order to store data from the respective device on the memory card or vice versa, or to store data from one device and deliver it to another device ensuring a simple and effective data exchange.

In the clipboard data space according to the present invention, either a data file to be copied to or from the memory card is intermediately stored, or a reference information relating to the data file to be copied is stored. Also, data files and reference information can be stored in the clipboard data space depending on the size of the data files and the specific application. Particularly, the possibility of using reference information giving e.g. the address or the location of the data file to be copied to or from the memory card enables copy and paste procedures in a very simple way, since it is not necessary to move the actual data more than once, i.e. when the data file is actually and physically copied.

Advantageously, a copy instruction is used to copy the data file and/or the reference information relating to the data file to be copied to said clipboard data space. Hereby, a paste instruction is advantageously used to copy the data file from the clipboard data space or the storage area of the data file referenced by the reference information to the memory card or the electronic device. Hereby, after said paste instruction used to copy the data file from the clipboard data space or the storage area of the data file referenced by the reference information to the memory card or the electronic device is completed, said data file and/or said reference information is advantageously deleted from the clipboard data space. Alternatively, after said paste instruction use to copy the data file from the clipboard data space or the storage area of the data referenced by the reference information to the memory card or the electronic device is completed, said data file and/or said reference information are advantageously maintained in the clipboard data space. Hereby, the data file and/or the reference information are advantageously deleted if new storage space is needed.

Advantageously, the clipboard data space is located in a memory means of the memory card. Alternatively, it may be advantageous if the clipboard data space is located in a memory means of the electronic device. Also, a clipboard data space can be located both in the memory means of the memory card and of the electronic device.

The memory card for storing data files according to the present invention is adapted to be inserted in and exchange data files with electronic devices on the basis of the data exchange method of the present invention. The electronic device according to the present invention comprises a memory means for storing data and is adapted to house a memory card and to exchange data files with a housed memory card on the basis of the data exchange method of the present invention.

The present invention is further explained in the following description by means of embodiments relating to the enclosed drawings, in which
Fig. 1 schematically shows an example of an electronic device and a memory card according to the present invention, and
Fig. 2 shows a schematic diagram of a memory means of a memory card according to the present invention.

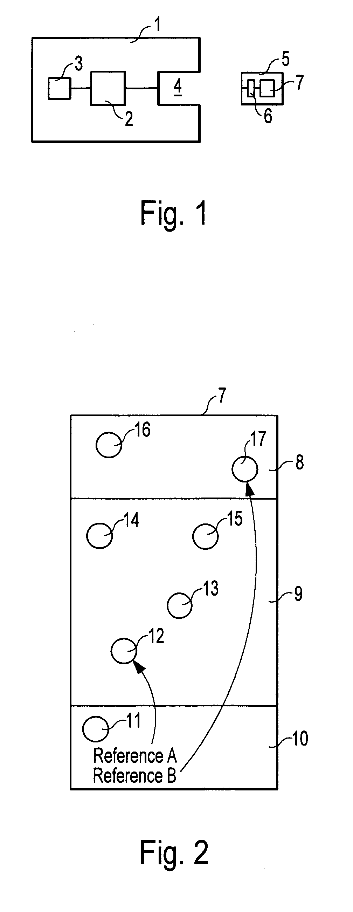

Fig. 1 schematically shows a block diagram of an electronic device 1 being adapted to house a memory card 5 and to exchange data files with said memory card 5, if inserted in and connected to the electronic device.

The electronic device 1 is e.g. a digital camera, a laptop computer, a PDA, a smartphone or any other device comprising functionalities to store data files. Generally, electronic devices 1 of this kind comprise a control means 2, e.g. a microprocessor, a processor, a CPU or the like and a memory means 3 for storing data and/or data files. Hereby, the electronic device 1 can be an electronic device which is able to only store and process a single data file type, or an electronic device which is adapted to process and store a number of data file types, such as jpeg, mpeg, wav, gif, doc, etc.

The electronic device 1 comprises a connection port 4 for connecting a memory card 5 to the electronic device 1. Hereby, the connection port 4 may e.g. a slot in the electronic device 1 or any other suited structure to receive the memory card 5. The memory card 5 comprises a control means 6, e.g. a microprocessor or the like, and a memory means 6, e.g. a non-erasable flash memory or the like. The control means 7 controls the data exchange between the memory means 6 of the memory card 5 and the electronic device 1 in co-operation with the control means 2 of the electronic device 1.

According to the present invention, the data exchange, i.e. the copying of data from the memory means 3 of the electronic device 1 to the memory means 7 of the memory card 5 and vice versa is done by using a clipboard data space. In the clipboard data space, the data file or data files to be copied from the memory means 7 to the memory means 3 or vice versa are, e.g. intermediately, stored. Alternatively or additionally, reference information relating to the data file to be copied is stored in the clipboard data space. Hereby, the reference information comprises a reference to the location or address of the data file to be copied.

The clipboard data space is a specific folder which is reserved for data files that are to be imported or exported. Hereby, the clipboard data space can be provided as a part of the memory means 7 of the memory card and/or the memory means 3 of the electronic device 1. Hereby, a part of the storage capacity of the memory means 7 and/or the memory means 3 is fixedly or flexibly allocated to the clipboard data space. Although a single electronic device 1 is shown if Figure 1, it is to be noted that the memory card 5 and the data exchange method according to the present invention are particularly advantageous for the data storage and data exchange between two or more electronic devices. Hereby, the electronic devices essentially have the same structure and comprise the same elements as the electronic device 1 shown in and described in relation to Figure 1. A particular advantage of the memory card 5 of the present invention and the data exchange method of the present invention is the use of the memory card 5 and the data exchange method to transmit data from one electronic device to the other. Hereby, the present invention provides a simple but very effective way of exchanging data between electronic devices of different kinds and types.

Fig. 2 schematically shows an example for the storage area of the memory means 7 of the memory card 5. The memory means 7 comprises a clipboard data space 10 for intermediately storing data files and/or reference information relating to data files to be copied to or from the memory means 7. In the shown example, a data file 11 and two references A and B are intermediately stored in the clipboard data space 10. In the shown example of the memory means 7, the remaining storage space is partitioned in two areas 8 and 9, respectively. The first memory area 8 is hereby allocated to a specific electronic device 1, e.g. a digital camera, and the second memory area 9 is allocated to a second electronic device, e.g. a laptop. This means that all data files imported or copied from a digital camera are stored in the first memory area 8 and all data files imported or copied from a laptop are stored in the second memory area 9. It is to be noted that this partitioning of the memory area 7 is only an example. The memory means 7 could also have no partitioning at all, except of course the clipboard data space 10 or more partitions could be present so that a specific memory area is allocated to a single type of a number of electronic devices.

The reference A stored in the clipboard data space 10 e.g. gives a reference to the data file 12 stored in the second memory area 9. The reference B stored in the clipboard data space 10 e.g. gives a reference to the data file 17 stored in the first memory area 8. Hereby, the reference can be realised by giving the location or address of the respective data file in the respective memory area. In the shown example, the first memory area 8 comprises to data files 16 and 17 stemming from a first electronic device, and the second memory area comprises four data files 12, 13, 14 and 15 stemming from a second electronic device. The data files within one memory area can either be of the same data file type, or from different data file types.

In the following, the data exchange method for exchanging data between the memory card 5 and the electronic device 1 is explained in more detail. E.g., if the memory card 5 comprising the memory means 7 of Fig. 2 is inserted in the electronic device 1 of Fig. 1, data files can be exchanged between the memory means 7 of the memory card 5 and the memory means 3 of the electronic device 1. The clipboard data space 10 according to the present invention hereby enables a simple copy and paste procedure and thus a very flexible way of storing data files of any data file type. If the user desires to copy the data file 12 stored in the second memory area 9 of the memory means 7 to the memory means 3 of the electronic device 1, he or she simply uses a copy instructions input in the man-machine-interface of the electronic device 1 to either copy the data file 12 into the clipboard data space 10 or to generate reference information relating to the location of the data file 12 in the memory means 7. This reference information is stored e.g. as reference information A in the clipboard data space 10. Thus, if a user decides to copy the file 12, the reference A is generated and stored in the clipboard data space 10. Then, the user has to input a paste instruction to the man-machine-interface of the electronic device 1 in order to cause the control means 2 of the electronic device 1 to read out and copy the data file 12 via the reference A in the clipboard data space 10 into the memory means 3. Alternatively, when the user inputs a copy instruction, an actual copy of the data file 12 can be generated and stored in the clipboard data space 10, e.g. as data file 11 as shown in Fig. 2. Then, when the user inputs the paste instruction, the data file 11 being a copy of the data file 12 is either entirely moved to the memory means 3 or copied to the memory means 3. In the later case, the data file 11 remains in the clipboard data space 10. Also, in the case of references, the reference information stored in the clipboard data space 10 can either be deleted immediately after the data file has been copied into the memory means 3 or may remain in the clipboard data space 10 for further use.

The above data exchange method of course also applies for copying data files from the memory means 3 of the electronic device 1 to the memory means 7 of the memory card 5. Hereby, the memory means 3 may comprise a clipboard data space similar to the clipboard data space 10 of the memory means 7. The user can then control the copying of data files from the memory means 3 to the memory means 7 by inputting copy and paste instructions into the man-machine-interface of the electronic device 1.

As stated above, data files and/or reference information being intermediately stored in the clipboard data space 10 may either remain in the clipboard data space 10 after the copy and paste steps are completed or may be deleted after completion of the paste step. In the first case, the data files and/or the reference information can be deleted if more and new storage space in the clipboard data space 10 is needed. The size of the clipboard data space 10 might be fixed or can be varied according to the needed storage space.

The present invention gives a complete freedom for storing and copying data to and from a memory card while still ensuring interoperability for data exchange.

## Claims

1. Data exchange method for exchanging data files between an electronic device (1) and a memory card (5) which can be connected to the electronic device (1), whereby, when a data file is to be copied from the memory card (5) to the electronic device (1) or from the electronic device (1) to the memory card (5), a clipboard data space (10) is used to store the data file and/or reference information relating to the data file to be copied to or from the memory card (5).

2. Data exchange method according to claim 1,
**characterised in,**
**that** a copy instruction is used to copy said data file and/or said reference information relating to the data file to be copied to said clipboard data space (10).

3. Data exchange method according to claim 2,
**characterised in,**
**that** a paste instruction is used to copy said data file from said clipboard data space (10) or the storage area of the data file referenced by said reference information to the memory card (5) or the electronic device (1).

4. Data exchange method according to claim 3,
**characterised in,**
**that** after said paste instruction used to copy said data file from said clipboard data space (10) or the storage area of the data file referenced by said reference information to the memory card (5) or the electronic device (1) is completed, said data file and/or said reference information is deleted from the clipboard data space.

5. Data exchange method according to claim 3,
**characterised in,**
**that** after said paste instruction used to copy said data file from said clipboard data space (10) or the storage area of the data referenced by said reference information to the memory card (5) or the electronic device (1) is completed, said data file and/or said reference information are maintained in the clipboard data space.

6. Data exchange method according to claim 5,
**characterised in,**
**that** said data file and/or said reference information are deleted if new storage space is needed.

7. Data exchange method according to one of the claims 1 to 6,
**characterised in,**
**that** said clipboard data space (10) is located in a memory means (7) of said memory card (5).

8. Data exchange method according to one of the claims 1 to 6,
**characterised in,**
**that** said clipboard data space (10) is located in a memory means (3) of said electronic device (1).

9. Memory card (5) for storing data files, said memory card (5) being adapted to be inserted in and exchange data files with electronic devices on the basis to the data exchange method according to one of the claims 1 to 8.

10. Electronic device (1) comprising a memory means (3) for storing data, said electronic device being adapted to house a memory card (5) and to exchange data files with a housed memory card on the basis of the data exchange method according to one of the claims 1 to 9.
